# FASCICULE DE BREVET EUROPEEN

(11) **EP 3 853 442 B1**
(45) Date de publication et mention de la délivrance du brevet: **27.12.2023**
(21) Numéro de dépôt: 19787023.1
(22) Date de dépôt: 12.09.2019
(51) Int. Cl.: F01D 5/00, F01D 5/28

(54) **PROCÉDÉ D'EXTRACTION D'UN CORPS ÉTRANGER NICHÉ DANS UNE PALE DE DISTRIBUTEUR HAUTE PRESSION**
VERFAHREN ZUM ENTFERNEN EINES FREMDKÖRPERS AUS EINER HOCHDRUCKVERDICHTERLEITSCHAUFEL
METHOD OF EXTRACTING DEBRIS FROM A HIGH PRESSURE COMPRESSOR VANE

(30) Priorité: 17.09.2018 FR 1858353
(43) Date de publication de la demande: 28.07.2021
(73) Titulaire: SAFRAN AIRCRAFT ENGINES, 75015 Paris (FR)
(72) Inventeur: MILLIASSEAU, Jean-Claude, 77550 MOISSY-CRAMAYEL (FR); JEHN, Christophe Marie Pierre Michel, 77550 MOISSY-CRAMAYEL (FR)
(74) Mandataire: Cabinet Camus Lebkiri
(86) Numéro de dépôt international: PCT/FR2019/052105
(87) Numéro de publication internationale: WO 2020/058601

(56) Documents cités:
- EP-A1- 2 995 410
- EP-A2- 2 028 342
- WO-A2-2005/045198

## Description

### DOMAINE TECHNIQUE

La présente invention concerne un procédé pour extraire un corps étranger d'une pale de distributeur haute pression de turbomachine. Elle concerne également un procédé pour détecter la présence d'un corps étranger dans une cavité de pale de distributeur haute pression.

L'invention trouve des applications dans le domaine de l'aéronautique et, en particulier, dans le domaine de la fabrication des pales de distributeur haute pression.

### ÉTAT DE LA TECHNIQUE

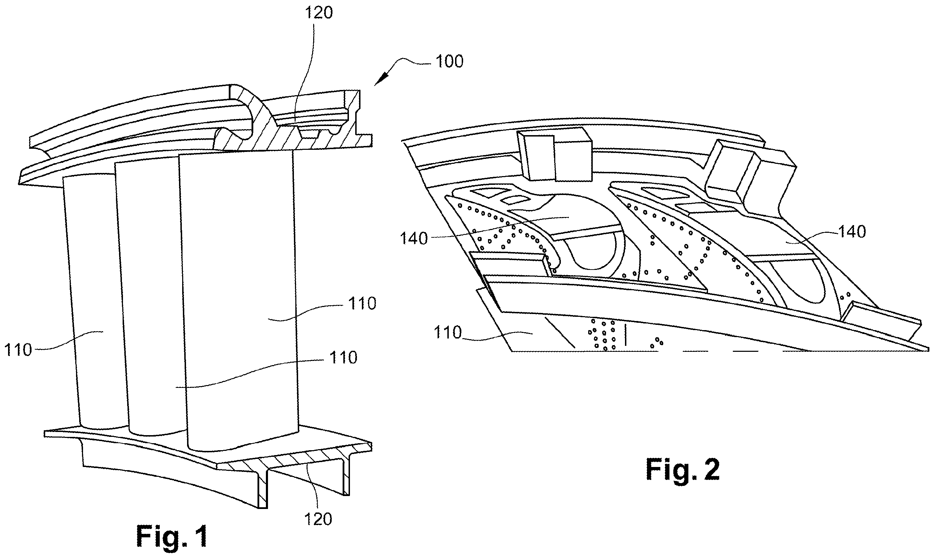

Dans un turboréacteur d'avion, le distributeur haute pression 100, dont un exemple est représenté sur la figure 1, est un ensemble de pales fixes 110 agencées entre deux plateformes annulaires coaxiales 120, appelées viroles, et délimitant une veine d'écoulement des gaz entre la sortie de la chambre de combustion et l'entrée de la turbine haute pression. Les pales 110, généralement creuses, comportent chacune deux cavités adjacentes dont une extrémité débouche à l'extérieur de la veine d'écoulement des gaz. Elles comportent également des trous s'étendant entre chaque cavité et la veine.

Dans certains distributeurs haute pression, chaque pale 110 comporte une chemise enchâssée dans chacune des cavités, et percée, sur toute sa surface s'étendant entre les plateformes annulaires 120, d'une pluralité de trous débouchant dans la cavité. Cette chemise a notamment pour but de refroidir la pale dans laquelle elle est enchâssée. Dans certains distributeurs haute pression, comme celui représenté sur la figure 2, ce sont les pales creuses qui sont percées. Qu'elle soit percée ou munie d'une chemise, chaque cavité de pale est fermée par une plaquette de fermeture 140 qui assure la régulation du refroidissement de ladite pale en obstruant de manière contrôlée les orifices de la cavité.

Les pales des turbines de réacteurs d'avion sont classiquement réalisées dans un superalliage métallique à base de Nickel, appelé AM1 (NiCr7Co8W5A15Ta8Ti). Toutefois, compte tenu de leur emplacement, les pales de distributeurs haute pression - appelés aussi DHP - sont soumises aux très fortes températures des gaz, notamment lors des phases de fonctionnement dites "chaudes" du réacteur comme, par exemple, la phase de décollage. Pour résister à ces très hautes températures, les pales de DHP en AM1 sont généralement recouvertes d'un revêtement isolant formant une barrière thermique - nommée également BT. Il est connu que la barrière thermique est constituée de plusieurs couches assurant chacune une fonction distincte. La couche extérieure, c'est-à-dire la plus exposée aux gaz chauds, de la barrière thermique est généralement une couche en céramique. La principale fonction de cette couche en céramique est l'isolation thermique. La couche intérieure de la barrière thermique, c'est-à-dire la couche au contact de l'AM1, est une sous-couche généralement dans un alliage d'aluminium et de platine comme l'AIPt. Cette sous-couche a pour fonction de protéger la pale contre l'oxydation et de maintenir la barrière thermique sur l'AM1.

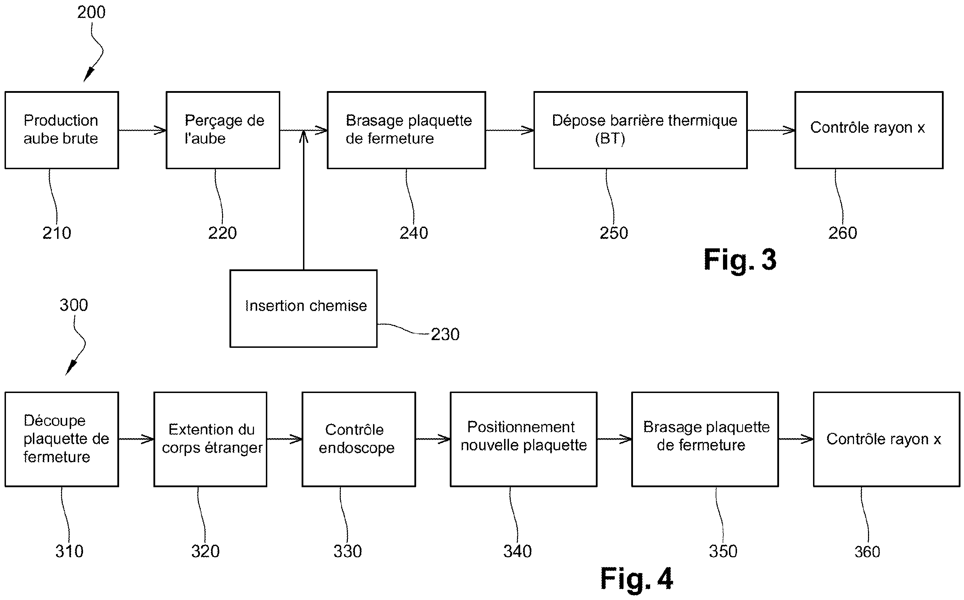

Généralement, les pales de DHP sont fabriquées suivant le procédé représenté sur la figure 3. Ce procédé consiste tout d'abord en une étape 210 de production d'une forme de pale brute de fonderie. A l'issue de cette étape 210, la pale brute comporte deux cavités qui sont percées, à l'étape 220, afin qu'elles puissent, par la suite, assurer le refroidissement de la pale. Lorsque chaque cavité est équipée d'une chemise, les chemises sont insérées dans les cavités de la pale à l'étape 230.Une plaquette de fermeture est ensuite brasée au-dessus de chacune des cavités pour fermer lesdites cavités (étape 240). Une fois les cavités des pales fermées, une barrière thermique est déposée sur la surface externe de chaque pale afin de protéger ladite pale, en particulier de la chaleur. Un contrôle par rayons x est ensuite effectué, à l'étape 260, pour vérifier si la pale est conforme au cahier des charges. Ce contrôle par rayons x permet notamment de détecter si les cavités sont vides de tous corps étrangers issus des opérations de fabrication.

En effet, il est possible, aussi bien à l'étape de fonderie qu'aux étapes de perçage, de brasage ou de pose de la barrière thermique, que des poussières ou autres résidus se soient déposés à l'intérieur de la pale, générant un défaut sur ladite pale. Or, la plupart des défauts ont pour conséquence une non-conformité de la pale aux exigences techniques en vigueur et une pale non-conforme est jetée au rebut.

Si des procédés pour réparer l'extrémité d'une pale de turbomachine sont connus, comme celui décrit dans le document de brevet EP 2 995 410 A1, aucun procédé pour retirer un corps étranger à l'intérieur de la pale n'est connu.

A ce jour, il est effectivement habituel de mettre au rebut toute pale considérée non-conforme suite à la détection d'un corps étranger dans une cavité car il est considéré que pour retirer le corps étranger, il faudrait avant tout retirer la barrière thermique revêtant la pale. Une solution envisagée par les fabricants de réacteurs d'avion pour retoucher une pale de DHP est la suivante :
- Décaper la pale non-conforme de sorte à retirer la barrière thermique recouvrant ladite pale ou au moins la couche en céramique de ladite barrière thermique ;
- Enlever la plaquette de fermeture ;
- Retirer le corps étranger de la cavité ;
- Braser une nouvelle plaquette de fermeture sur la pale à l'état nu ;
- Déposer une nouvelle barrière thermique ; et
- Effectuer un nouveau contrôle par rayons x.

Cependant, un tel procédé de retouche présenterait de nombreux inconvénients et, en particulier, le fait qu'il aurait un impact sur le dimensionnel de la pale dans la mesure où le décapage de la pièce équivaut à un usinage chimique de ladite pièce en AM1. Un autre inconvénient serait le risque de résidu lors du décapage de la barrière thermique (notamment si la sous-couche en AlPt n'est pas retirée), qui pourrait provoquer des surépaisseurs lors de la pose de la nouvelle barrière thermique. Un autre inconvénient encore serait le risque d'accroissement de la non-conformité des pales dû à la pose des nouveaux revêtements. En outre, la mise en oeuvre d'un tel procédé de retouche serait onéreuse car, le coût d'une barrière thermique étant élevé, le fait de poser deux fois cette barrière thermique est onéreux.

### RESUME DE L'INVENTION

Pour répondre au problème évoqué ci-dessus de mise au rebut des pales non-conformes pour cause de corps étranger dans une cavité, le demandeur propose un procédé d'extraction du corps étranger dans lequel seule la plaquette de fermeture est découpée et remplacée par une nouvelle plaquette de fermeture brasée directement sur la pale revêtue de la barrière thermique.

Selon un premier aspect, l'invention concerne un procédé d'extraction d'au moins un corps étranger niché au sein d'une pale d'un distributeur haute pression d'un turboréacteur, ledit distributeur haute pression comportant des pales en superalliage métallique à base de Nickel, creuses et fixes entre deux viroles annulaires formant une veine de circulation de gaz, chaque pale étant revêtue d'une barrière thermique comportant une couche en céramique et percée d'au moins une cavité au moins partiellement obstruée par une première plaquette de fermeture, brasée. Ce procédé se caractérise par le fait qu'il comporte les opérations suivantes :
- découpe de la première plaquette de fermeture,
- extraction du corps étranger hors de la cavité,
- contrôle endoscopique d'un espace intérieur de la cavité de sorte à vérifier qu'aucun corps étranger ne subsiste,
- positionnement d'une seconde plaquette de fermeture sur la cavité, et
- brasage de la seconde plaquette de fermeture directement sur le distributeur avec les pales revêtues de la barrière thermique.

Ce procédé d'extraction permet de retoucher une pale, considérée comme non-conforme en sortie de production, en retirant les corps étrangers nichés dans ladite pale et à l'origine de sa non-conformité, sans aucune opération de retrait ou de décapage de la barrière thermique.

On appelle « corps étranger », toute poussière, résidu de fabrication ou particule déposée ou accrochée dans une cavité d'une pale du distributeur haute pression.

De façon avantageuse, la découpe de la première plaquette est réalisée par meulage de ladite plaquette.

Le procédé d'extraction selon l'invention peut comporter une ou plusieurs des caractéristiques suivantes :
- le positionnement de la seconde plaquette de fermeture est réalisé par pointage et micro billage sur le distributeur haute pression ;
- la seconde plaquette de fermeture est préfrittée ;
- le brasage de la seconde plaquette est réalisé dans un four sous vide, à une température inférieure à 1200°C ;
- le brasage comporte un cycle thermique réalisé à une température comprise entre environ 1160°C et 1200°C pendant 10 à 20 minutes puis un cycle de diffusion à une température comprise entre environ 1150°C et 1200°C pendant 2 à 4 heures ;
- il comporte, après l'opération de brasage de la seconde plaquette de fermeture, un contrôle sous rayons x du distributeur haute pression

### BREVE DESCRIPTION DES FIGURES

D'autres avantages et caractéristiques de l'invention apparaîtront à la lecture de la description, illustrée par les figures dans lesquelles :
- La figure 1, déjà décrite, représente schématiquement une vue partielle d'un distributeur haute pression de l'art antérieur ;
- La figure 2, déjà décrite, représente schématiquement une vue partielle d'une pale de distributeur haute pression de l'art antérieur ;
- La figure 3, déjà décrite, représente un diagramme fonctionnel du procédé de production habituel de pales de distributeur haute pression ;
- La figure 4 représente un diagramme fonctionnel du procédé d'extraction d'un corps étranger selon l'invention ;
- La figure 5 représente une vue en coupe agrandie des couches de matériaux formant la barrière thermique recouvrant une pale de distributeur haute pression ;
- Les figures 6A et 6B représentent des vues en coupe agrandie d'une barrière thermique, respectivement, avant brasage et après re-brasage.

### DESCRIPTION DÉTAILLÉE D'AU MOINS UN MODE DE REALISATION

Un exemple de réalisation d'un procédé d'extraction d'un corps étranger niché dans une cavité d'une pale de distributeur haute pression est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

La figure 4 représente, sous la forme d'un diagramme fonctionnel, les différentes étapes du procédé d'extraction 300 permettant de retoucher une pale considérée comme non-conforme après le contrôle 260 sous rayons x. Ce procédé peut s'appliquer à toutes pièces en AM1 recouverte d'une barrière thermique comme, par exemple, une pale de distributeur haute pression 110 du type de celle représentée sur les figures 1 et 2. Comme expliqué précédemment, chaque pale de distributeur haute pression 110 - appelées plus simplement pale - comporte des cavités adjacentes dont les parois peuvent être percées ou à l'intérieur desquelles une chemise peut être enchâssée. Une plaquette de fermeture 140 est montée par brasure à l'extrémité ouverte de chaque cavité de la pale afin de fermer ladite cavité et, éventuellement, y maintenir la chemise.

Selon l'invention, une pale considérée comme non-conforme en sortie de production peut être retouchée et le ou les corps étrangers extraits. Afin d'extraire tout corps étranger détecté à l'intérieur d'une cavité de pale lors du contrôle par rayon x effectué à la fin du procédé de fabrication de la pale, le procédé d'extraction 300 de l'invention propose de réaliser une première opération 310 de découpe de la plaquette de fermeture 140 d'origine, appelée aussi première plaquette. Cette découpe de la plaquette de fermeture 140 consiste à enlever au moyen d'une meule toute la matière formant la plaquette de fermeture 140. Le fait de meuler la plaquette de fermeture permet de ne retirer que la matière formant la plaquette de fermeture, sans enlever ni dégrader la barrière thermique revêtant la pale.

Lorsque la plaquette de fermeture 140 a été totalement meulée, le ou les corps étrangers présents dans la cavité peuvent être retirés au moyen d'un outil approprié du type goupillon, crochet, pince, etc., lors d'une opération d'extraction 320. Le procédé d'extraction 300 peut se poursuivre par une opération de contrôle par endoscope 330. Ce contrôle endoscopique 330 permet, en insérant un endoscope à l'intérieur de la cavité, d'examiner l'espace intérieur de la cavité et notamment ses parois intérieures afin de vérifier que tous les corps étrangers ont été extraits. Il permet également de vérifier si l'opération de meulage 310 de la première plaquette de fermeture n'a pas généré de nouvelle poussière ou autre corps étranger.

Après ce contrôle endoscopique 330, une nouvelle plaquette de fermeture 140, appelée aussi seconde plaquette de fermeture, est positionnée devant l'ouverture de la cavité, approximativement à l'emplacement où se trouvait la première plaquette de fermeture. Ce positionnement de la nouvelle plaquette de fermeture 140 est réalisé par pointage et micro billage de ladite plaquette sur la pale 110 du distributeur haute pression. L'opération de pointage et micro billage de la plaquette de fermeture consiste à préfixer la plaquette sur la pale de distributeur haute pression au moyen de points de soudure réalisés, par exemple, avec une électrode pleine pour le pointage et une électrode creuse pour le micro billage.

Une fois la nouvelle plaquette de fermeture correctement positionnée, ladite plaquette peut être brasée sur le distributeur haute pression lors d'une opération de brasage 350. Durant cette opération de brasage 350, la nouvelle plaquette de fermeture est brasée directement sur la pale de distributeur revêtue de la barrière thermique. La nouvelle plaquette de fermeture 140 est une plaquette de fermeture classique, préfrittée, identique à la plaquette de fermeture d'origine. Le brasage est réalisé sous vide, dans un four adapté, à une température de brasage ne dépassant pas 1180°C +/- 10°C. Les conditions de brasage de la nouvelle plaquette de fermeture 140 sont des conditions de brasage classiques, dans lesquelles la nouvelle plaquette de fermeture comporte un fritté (c'est-à-dire une poudre agglomérée par compression et chauffage simultané en dessous de la température de fusion), et est soumise, avec le distributeur haute pression, à un cycle thermique et un cycle de diffusion amenant l'ensemble à une température de traitement qui se situe en dessous de sa température de fusion mais qui est suffisante pour que le fritté fonde et conglomère la plaquette avec le distributeur haute pression. Le cycle thermique peut comporter, par exemple, une cuisson sous vide de 15 minutes à 1180°C. Le cycle de diffusion, engagé à la suite du cycle thermique, peut comporter, par exemple, une cuisson sous vide de 3 heures à 1175°C.

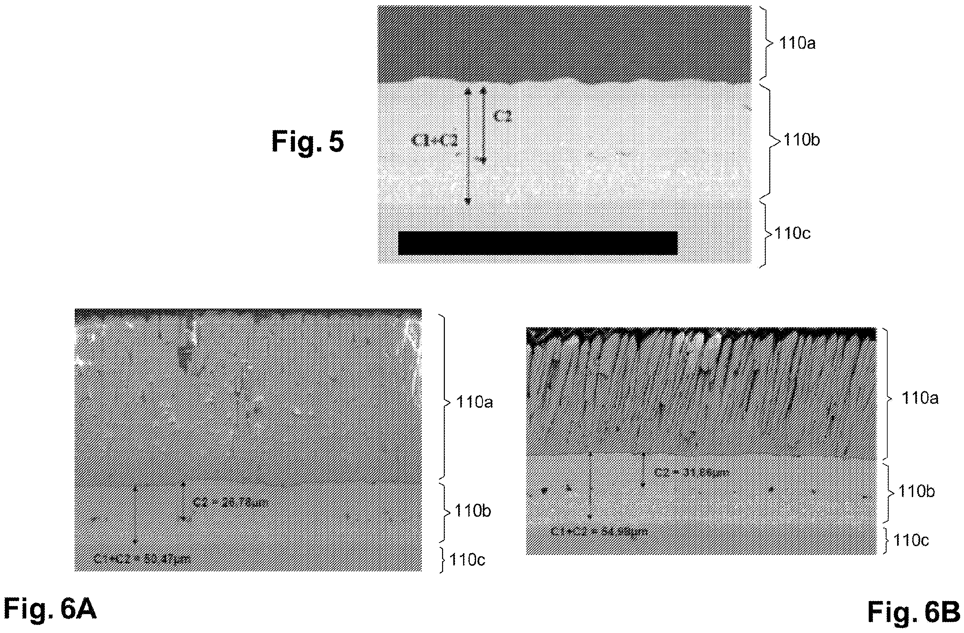

Contrairement à l'opération de brasage de la première plaquette de fermeture, lors du brasage 350 de la nouvelle plaquette de fermeture, la barrière thermique est présente sur le distributeur haute pression 100. Un exemple d'une vue en coupe agrandie d'une portion d'pale en AM1 revêtue de cette barrière thermique est représenté sur la figure 5. Cet exemple montre une couche 110c d'AM1 formant la pale 110, recouverte d'une sous-couche 110b en AlPt et d'une couche de céramique 110a formant la barrière thermique.

Dans le procédé de l'invention, la pale de distributeur haute pression, qui a été préalablement brasée avec la plaquette de fermeture d'origine, est brasée une seconde fois lors de l'opération de brasage 350. Lors de cette seconde opération de brasage 350, la pale 110 est revêtue de sa barrière thermique. Bien que l'homme du métier penserait que le cycle thermique généré pour braser la nouvelle plaquette de fermeture a un effet dommageable sur la barrière thermique du distributeur haute pression, notamment par diffusion de la sous-couche, le demandeur a été surpris de constater qu'il n'en est rien. En effet, d'une part, la pale en AM1 est adaptée pour supporter un second cycle thermique sans risque de modification de sa structure. D'autre part, la couche en céramique (ZrO2/Y2O3) de la barrière thermique est adaptée pour subir un cycle thermique à environ 1180°C puisque sa température de fusion dépasse 1200°C. Enfin, comme montré sur les figures 6A et 6B, la sous-couche de la barrière thermique ne migre pas à l'intérieur de la pale en AM1. En effet, même si, dans les conditions de brasage énoncées ci-dessus, la sous-couche 110b évolue légèrement par diffusion, cela n'a aucun impact sur la conformité de la pale 110 du distributeur haute pression. Un exemple de la structure AM1 avec barrière thermique avant le second cycle thermique est représenté sur la figure 6A. Un exemple de la même structure AM1 avec barrière thermique après le second cycle thermique (c'est-à-dire après re-brasage) est représenté sur la figure 6B. Une comparaison des deux figures 6A et 6B montre que, même si la sous-couche 110b a légèrement migré dans la pièce en AM1 110c et dans la couche en céramique 110a, l'épaisseur c1 +c2 de sous-couche 110b est à peine plus petite qu'avant le premier cycle thermique et est donc suffisamment grande pour permettre l'adhésion de la barrière thermique sur la pale en AM1 et la protection de ladite pale.

Le demandeur a réalisé d'autres essais de re-brasage avec des températures et des durées de cuisson modulées - par exemple un cycle thermique pendant 10 à 20 minutes à des températures comprises entre environ 1160°C et 1200°C et un cycle de diffusion pendant 2 à 4 heures à des températures comprises entre 1150°C et 1200°C - et il a constaté que la sous-couche 110b évolue peu et que la microstructure n'est pas modifiée ni par appauvrissement d'aluminium ni par transformation en gamma prime. Le précipité dans l'AM1 reste compris entre 0,3 et 0,7 micron. L'épaisseur c1+c2 de la sous-couche reste comprise entre 40µm et 75µm et la proportion c2/(c1+c2) comprise entre 50% et 80%. De même la proportion de platine (Pt) reste comprise entre 23% et 40% et la proportion d'aluminium (Al) comprise entre 17% et 25%, ces épaisseur et proportions étant conformes aux exigences techniques DMP32-021.

L'opération 350 de brasage de la nouvelle plaquette de fermeture 140 permet donc de conglomérer ladite nouvelle plaquette sur la pale de distributeur haute pression sans générer d'effet dommageable sur la structure du distributeur haute pression. Le distributeur haute pression retouché aura donc des performances identiques à celles d'un distributeur haute pression standard.

Le procédé d'extraction 300, qui vient d'être décrit, peut être complété par une opération 360 de contrôle sous rayons x de la cavité de la pale du distributeur haute pression. Cette opération de contrôle 360 est mise en oeuvre à la fin du procédé d'extraction 300 pour vérifier si tous les corps étrangers ont bien été retirés des cavités de la pale de distributeur haute pression.

Bien que décrit à travers un certain nombre d'exemples, variantes et modes de réalisation, le procédé d'extraction de corps étrangers selon l'invention comprend divers variantes, modifications et perfectionnements qui apparaîtront de façon évidente à l'homme du métier, étant entendu que ces variantes, modifications et perfectionnements font partie de la portée de l'invention telle que définit par les revendications suivantes.

## Revendications

1. Procédé d'extraction d'au moins un corps étranger niché au sein d'une pale (110) d'un distributeur haute pression (100) d'un turboréacteur, ledit distributeur haute pression comportant des pales (110) en superalliage métallique à base de Nickel, creuses et fixes entre deux viroles annulaires formant une veine de circulation de gaz, chaque pale étant revêtue d'une barrière thermique comportant une couche en céramique et percée d'au moins une cavité au moins partiellement obstruée par une première plaquette de fermeture (140), brasée, **caractérisé en ce qu'**il comporte les opérations suivantes :
- découpe (310) de la première plaquette de fermeture,
- extraction (320) du corps étranger hors de la cavité,
- contrôle endoscopique (330) d'un espace intérieur de la cavité de sorte à vérifier qu'aucun corps étranger ne subsiste,
- positionnement (340) d'une seconde plaquette de fermeture sur la cavité, et
- brasage (350) de la seconde plaquette de fermeture directement sur le distributeur avec les pales revêtues de la barrière thermique.

2. Procédé d'extraction selon la revendication 1, **caractérisé en ce que** la découpe (310) de la première plaquette de fermeture est réalisée par meulage de ladite plaquette.

3. Procédé d'extraction selon la revendication 1 ou 2, **caractérisé en ce que** le positionnement (340) de la seconde plaquette de fermeture est réalisé par pointage sur le distributeur haute pression.

4. Procédé d'extraction selon l'une quelconque des revendications 1 à 3, **caractérisé en ce que** la seconde plaquette de fermeture (140) est préfrittée.

5. Procédé d'extraction selon l'une quelconque des revendications 1 à 4, **caractérisé en ce que** le brasage (350) de la seconde plaquette de fermeture est réalisé dans un four sous vide, à une température inférieure à 1200°C.

6. Procédé d'extraction selon la revendication 5, **caractérisé en ce que** le brasage (350) de la seconde plaquette de fermeture (140) comporte un cycle thermique réalisé à une température comprise entre environ 1160°C et 1200°C pendant 10 à 20 minutes puis un cycle de diffusion à une température comprise entre environ 1150°C et 1200°C pendant 2 à 4 heures.

7. Procédé d'extraction selon l'une quelconque des revendications 1 à 6, **caractérisé en ce que** qu'il comporte, après l'opération de brasage de la seconde plaquette de fermeture, une opération de contrôle (360) sous rayons x du distributeur haute pression.

## Patentansprüche

1. Verfahren zum Entfernen mindestens eines Fremdkörpers, der sich im Inneren einer Schaufel (110) eines Hochdruckverteilers (100) eines Turbotriebwerks festgesetzt hat, wobei der Hochdruckverteiler Schaufeln (110) aus metallischer Superlegierung auf Nickelbasis aufweist, die hohl und fest zwischen zwei ringförmigen Zwingen angeordnet sind und einen Gaszirkulationskanal bilden, wobei jede Schaufel mit einer Wärmesperre überzogen ist, die eine Keramikschicht umfasst, und von mindestens einem Hohlraum durchbrochen ist, der zumindest teilweise von einem ersten gelöteten Verschlussplättchen (140) verschlossen wird, **dadurch gekennzeichnet, dass** es die folgenden Schritte umfasst:
- Zuschneiden (310) des ersten Verschlussplättchens,
- Herausziehen (320) des Fremdkörpers aus dem Hohlraum,
- endoskopische Kontrolle (330) eines Innenraums des Hohlraums, um zu überprüfen, dass keine Fremdkörper zurückbleiben,
- Positionieren (340) eines zweiten Verschlussplättchens über dem Hohlraum, und
- Löten (350) des zweiten Verschlussplättchens direkt auf den Verteiler mit den mit der Wärmesperre beschichteten Schaufeln.

2. Extraktionsverfahren nach Anspruch 1, **dadurch gekennzeichnet, dass** das Zuschneiden (310) des ersten Verschlussplättchens durch Schleifen dieses Plättchens durchgeführt wird.

3. Extraktionsverfahren nach Anspruch 1 oder 2, **dadurch gekennzeichnet, dass** die Positionierung (340) des zweiten Verschlussplättchens durch Heftschweißen auf den Hochdruckverteiler erfolgt.

4. Extraktionsverfahren nach einem der Ansprüche 1 bis 3, **dadurch gekennzeichnet, dass** das zweite Verschlussplättchen (140) vorgesintert ist.

5. Extraktionsverfahren nach einem der Ansprüche 1 bis 4, **dadurch gekennzeichnet, dass** das Löten (350) des zweiten Verschlussplättchens in einem Vakuumofen bei einer Temperatur unter 1200°C durchgeführt wird.

6. Extraktionsverfahren nach Anspruch 5, **dadurch gekennzeichnet, dass** das Löten (350) des zweiten Verschlussplättchens (140) einen Wärmezyklus umfasst, der bei einer Temperatur zwischen etwa 1160°C und 1200°C für 10 bis 20 Minuten durchgeführt wird, und anschließend einen Diffusionszyklus bei einer Temperatur zwischen etwa 1150°C und 1200°C für 2 bis 4 Stunden umfasst.

7. Extraktionsverfahren nach einem der Ansprüche 1 bis 6, **dadurch gekennzeichnet, dass** es nach dem Lötvorgang des zweiten Verschlussplättchens einen Kontrollvorgang (360) unter Röntgenstrahlen des Hochdruckverteilers umfasst.

## Claims

1. A method for extracting at least one foreign body lodged within a blade (110) of a high-pressure distributor (100) of a turbojet engine, said high-pressure distributor including fixed hollow blades (110) between two annular shrouds forming a gas flow stream, each blade being coated with a thermal barrier and drilled with at least one cavity at least partially obstructed by a first brazed closing plate (140), **characterised in that** it includes the following operations of:
- cutting (310) the first closing plate,
- extracting (320) the foreign body out of the cavity,
- endoscopically inspecting (330) an internal space of the cavity to check that no foreign bodies remain,
- positioning (340) a second closing plate on the cavity, and
- brazing (350) the second closing plate directly to the distributor with the blades coated with the thermal barrier.

2. The extraction method according to claim 1, **characterised in that** cutting (310) the first closing plate is performed by grinding said plate.

3. The extraction method according to claim 1 or 2, **characterised in that** positioning (340) the second closing plate is performed by jig boring on the high-pressure distributor.

4. The extraction method according to any of claims 1 to 3, **characterised in that** the second closing plate (140) is pre-sintered.

5. The extraction method according to any of claims 1 to 4, **characterised in that** brazing (350) the second closing plate is performed in a vacuum furnace at a temperature below 1200°C.

6. The extraction method according to claim 5, **characterised in that** brazing (350) the second closing plate (140) includes a thermal cycle performed at a temperature of between approximately 1160°C and 1200°C for 10 to 20 minutes, and then a diffusion cycle at a temperature of between approximately 1150°C and 1200°C for 2 to 4 hours.

7. The extraction method according to any of claims 1 to 6, **characterised in that** it includes, after the operation of brazing the second closing plate, an operation (360) of X-ray inspecting the high-pressure distributor.
